# EUROPEAN PATENT SPECIFICATION

(11) **EP 0 689 341 B1**
(45) Date of publication and mention of the grant of the patent: **26.07.2000**
(21) Application number: 95303447.7
(22) Date of filing: 23.05.1995
(51) Int. Cl.: H04N 1/407, H04N 1/04

(54) **An image scanner having system extending function**
Bildabtaster mit Systemerweiterungsfunktion
Analyseur d'images avec fonction d'extension du système

(30) Priority: 24.05.1994 JP 10986394; 20.09.1994 JP 22494294
(43) Date of publication of application: 27.12.1995
(60) Divisional application: 99123908.8
(73) Proprietor: PFU LIMITED, Kahoku-gun Ishikawa 929-1192 (JP); FUJITSU LIMITED, Kawasaki-shi, Kanagawa 211 (JP)
(72) Inventor: Kaji, Yukio, c/o PFU Limited, Kahoku-gun, Ishikawa 929-11 (JP); Murosaki, Mikio, c/o PFU Limited, Kahoku-gun, Ishikawa 929-11 (JP); Kanemitsu, Norio, c/o Fujitsu Limited, Kawasaki-shi, Kanagawa 211 (JP)
(74) Representative: Hitching, Peter Matthew

(56) References cited:
- EP-A- 0 291 042
- EP-A- 0 590 609
- GB-A- 2 202 349
- US-A- 4 794 460
- US-A- 5 146 351
- US-A- 5 214 520
- US-A- 5 293 257
- PATENT ABSTRACTS OF JAPAN vol. 18, no. 278 (P-1743), 26 May 1994 & JP-A-06 044351 (YAMAGUCHI PREF GOV), 18 February 1994,

## Description

The present invention relates to an image scanner and, more particularly, it relates to an image scanner having a system extending function.

Recently, image scanners have become widely utilized in various fields, for example, communication, business, designs, education, arts, etc. Accordingly, various functions are required in a recent image scanner in order to satisfy a user's request. One of these functions is an extension slot which can be easily utilized by the user.

JP-A-6-044351 discloses image scanning apparatus which may be considered to comprise image reading means, including a light source and sensor means, for reading an image recorded on a document, and also comprising image control means including: main circuitry provided on a main printed-circuit board of the image control means, for carrying out predetermined functions of the apparatus, the main circuitry including a control portion connected operatively to the said image reading means and operable to receive one or more input control signals and to output one or more output control signals and one or more image signals representing the image read by the image reading means; main connector means for connection when the apparatus is in use to an external device to receive the said input control signal(s) therefrom and to output the said output control signal(s) and the said image signal(s) thereto; an extension slot at which a user-provided printed-circuit board, carrying further circuitry for carrying out further functions different from the said predetermined functions, can be mounted within the image control means when the apparatus is in use; and extension connector means connected to the said main printed-circuit board and also arranged to connect to such a user-provided printed-circuit board when mounted at the said extension slot, for connecting the said further circuitry to the said control portion of the said main circuitry.

This apparatus permits expansion of the image processing function by providing plural slots on a motherboard, each slot having the same pin assignment.

Image scanning apparatus embodying the present invention is characterised in that the said main circuitry includes signal driver/receiver means connected between the said control portion and the said main connector means for receiving the said input control signal(s) from the said external device and supplying that/those signal(s) to the said control portion, and for receiving the said output control signal(s) and the said image signal(s) from the said control portion and supplying those signals to the said external device; and further characterised in that, when such a user-provided printed-circuit board is mounted at the said extension slot, the said extension connector means serve to receive the said input control signal(s) from the said further circuitry and to supply that/those signal(s) to the said control portion and also serve to receive the said output control signal(s) and the said image signal(s) from the control portion and to supply those signals to the said further circuitry, without the said input and output control signals and the said image signal(s) passing through the said signal driver/receiver means.

In such image scanning apparatus the extension slot within the image scanner can be easily utilized by a user, without limitations associated with the signal driver/receiver means.

On the other hand, in general, image scanners of two main types are available, the two types differing structurally, i.e., a flat bed (FB) type and an automatic document feeding (ADF) type. The main difference between the FB type and the ADF type lies in that an original document (manuscript) is not moved in the former, but is moved in the latter, when it is read by an image read means.

In one embodiment the image scanner has a flat-bed type scanning unit and an automatic-document-feeding type scanning unit.

In this case, the extension connector means can be used for testing the difference between an image output from the flat bed type scanning unit and from the automatic document type scanning unit.

Reference will now be made, by way of example, to the accompanying drawings, in which:
Fig. 1 is a schematic perspective view illustrating a basic structure of an image scanner embodying the present invention;
Fig. 2 is a detailed block diagram of the image scanner;
Fig. 3 is a perspective view of the image scanner;
Fig. 4 is a detailed block diagram of a control unit shown in Fig. 3;
Fig. 5 shows some examples of a video interface for image signals;
Fig. 6 shows some examples of a control interface for control signals;
Fig. 7 shows an interface between a control circuit and an extension slot;
Fig. 8 is an explanatory view for explaining a main scanning direction and a sub-scanning direction;
Figs. 9A to 9E are timing charts of the video interface;
Fig. 10 is a detailed circuit of a receiver of Fig. 5;
Fig. 11A and 11B are explanatory views for explaining connection to an external unit;
Fig. 12 is a detailed block diagram of another control unit;
Fig. 13A is a detailed block diagram of the control circuit shown in Fig. 4; and
Fig. 13B is a detailed block diagram of the control circuit shown in Fig. 12.

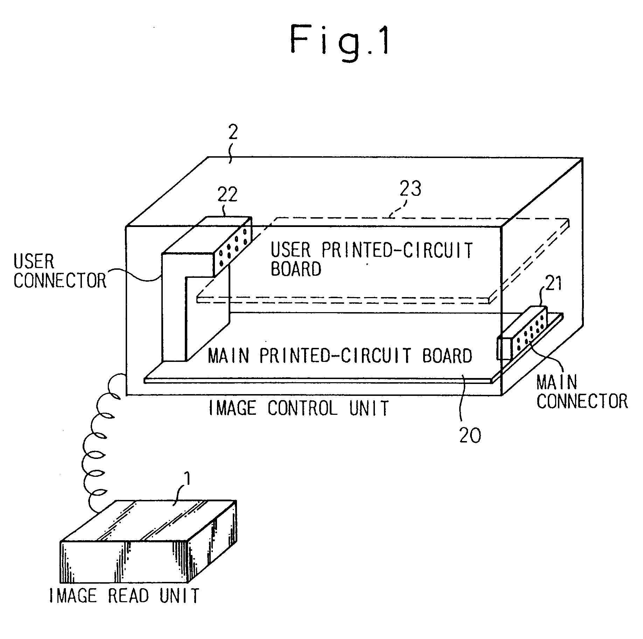

Figure 1 illustrates a basic structure of an image scanner including an image read unit and an image control unit which is connected to the image read unit. The image read unit 1 includes CCD image sensors to read a manuscript. The image control unit 2 includes: at least one main printed-circuit board 20 having various functions which are essentially provided to operate the image scanner; a main connector 21 to connect the main printed-circuit board 20 to an external stage (i.e., host computer); and a user connector 22 to connect the main printed-circuit board 20 to a user printed-circuit board 23 which is selectively provided by a user.

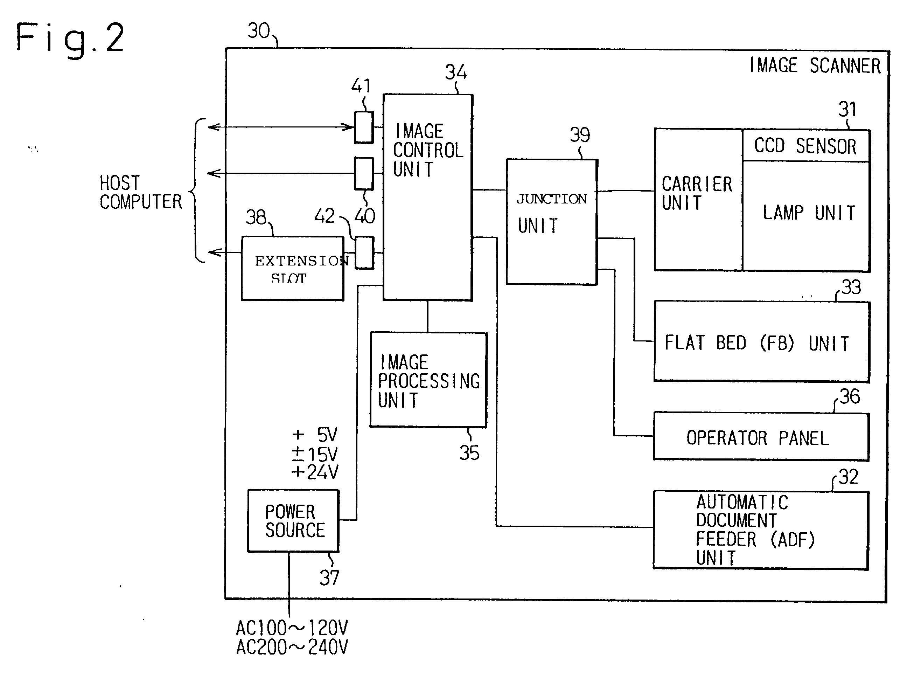

Although a detailed operation will be explained with reference to Fig. 2, briefly, the image control unit 2 receives control signals from an external stage through an associated receiver, sends control signals to the external stage through an associated driver, and sends an image signal to the external stage through an associated driver. Further, the image control unit 2 controls the operation of the image read unit 1, and sends the image signal to the external stage after predetermined image processing thereto.

The main printed-circuit board 20 has functions to control the operation of the image read unit 1. The main connector 21 outputs the image signal and the control signals to the external stage through driver(s) mounted on the main printed-circuit board 20, and receives control signals from the external stage through the receiver which is mounted on the main printed-circuit board 20.

The connector 22 is provided for the user printed-circuit board 23 which is selectively mounted by the user, and directly sends control signals to the user printed-circuit board 23 without passing through the associated driver/receiver, and directly sends the image signal to the user printed-circuit board 23 without passing through the associated driver.

In one embodiment, when the user printed-circuit board 23 is mounted on the connector 22, the control signals through the main connector 21 become invalid and the control signals through the connector 22 become valid. In another embodiment, both connectors 21 and 22 become valid.

As explained above, in the Figure 1 image scanner the connector 22 is provided in the image control unit 2 to mount the user printed-circuit board 23 therein. The connector 22 directly connects the image signal to the user printed-circuit board 23 without passing through the associated driver, and directly connects the control signals to the user printed-circuit board 23 without passing through the associated driver/receiver.

Thus, in the image control unit 2 the image signal is directly provided to the user without passing through the associated driver and the control signals in the unit 2 are also directly provided to the user without passing through the associated driver/receiver.

Accordingly, when the user wishes to obtain a new image process which is not provided in the image control unit, the user connects the user printed-circuit board 23 to the connector 22. In this case, as explained above, since the image signal from the connector 22 to the user printed-circuit board 23 is not passed through the associated driver, it is possible for the user to obtain the new image process, which is required by the user, without any limitation being imposed by the associated driver.

Further, when the user wishes to connect another new system which cannot be connected by a current external interface of the image control unit, the user provides a new user printed-circuit board which can connect the new system to the connector 22. As explained above, since the image signal and the control signals from the connector 22 to the new user printed-circuit board 23 are not passed through the associated driver/receiver, it is possible for the user to obtain the new image process, which is required by the user, without any limitation being imposed by that driver/receiver.

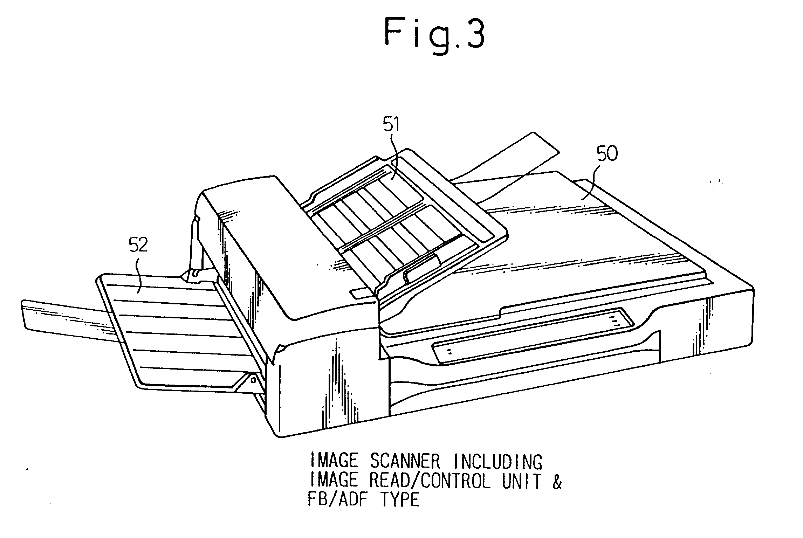

Figure 2 is a detailed block diagram of the image scanner, and Figure 3 is a perspective view of the image scanner. In Fig. 2, the image scanner 30 includes a carrier unit 31, an automatic document feeder (ADF) unit 32, a flat bed (FB) unit 33, an image control unit 34, an image processing unit 35, an operator panel 36, a power source 37, an extension slot 38, a junction unit 39, a video connector 40 for the image signal, a control connector 41 for control signals, and an extension connector 42 for the extension slot 38. The connectors 40 and 41 are connected to a host computer.

The carrier unit 31 corresponds to the image read unit 1 of Fig. 1 and includes CCD image sensors and a lamp unit for reading an image from a manuscript.

The ADF unit 32 is formed by a glass plate, to hold the manuscript, a stacker to store the manuscript after read operation, a feeding mechanism to feed the manuscript sheet by sheet, an ADF motor to move the feeding mechanism, and various sensors to control the operation of the feeding mechanism and rotation of the ADF motor.

The FB unit 33 is formed by a flat bed on which the manuscript is placed, a carrier motor to move the carrier unit 31, and position sensors to detect the position of the carrier unit 31.

As shown in Fig. 3, the image scanner in the present embodiment includes both an ADF unit and an FB unit. In Fig. 3, reference number 50 denotes the flat bed (FB), and reference number 51 denotes a manuscript base used for the ADF type. Further, reference number 52 is a stacker for the ADF type. In the ADF type, manuscripts on the base 51 are automatically transferred sheet by sheet and each manuscript is read by the image read unit. In the FB type, the manuscript is manually put on the flat bed (glass plate) one sheet at a time.

Briefly, the image control unit 34 controls the operations of the carrier unit 31, the ADF unit 32 and FB unit 33 in accordance with instructions from a host computer. Further, the image control unit 34 receives image signals read by the carrier unit 31, and performs A/D conversion on the signals. Still further, the image control unit 34 generates various video interface signals, and sends them to the host computer as explained in detail below.

The image processing unit 35 performs various processes on the image signal, for example, emphasis and smoothing of the image, conversion from white image to black image and vice versa, a mirror image generated from the original image, extraction of outline of the image, separation of the image from an original manuscript bearing a mixture of characters and photos, half-tone dot meshing of the image, and enlargement and reduction of the image.

The operator panel 36 is operated by the user to input various instructions to the image scanner. The power source 37 receives AC voltages, for example, 100 to 120 (v) and 200 to 240 (v), and generates DC voltages, for example, +5 (v), +/-15 (v) and +24 (v) to operate the image control unit 34.

The extension slot 38 receives the user printed-circuit board 23 which is selectively provided by the user when the user wishes to extend the functions of the image scanner. The junction unit 39 is a connector to connect between the image control unit 34 and the carrier unit 31, the FB unit 33 and the operator panel 36. The ADF unit 32 is directly connected to the image control unit 34 without passing through the junction unit 39.

The video connector 40 is provided for connecting between the image control unit 34 and the host computer, and is used to output the image signal to the host computer. The control connector 41 is provided for connecting between the image control unit 34 and the host computer, and is used to input/output control signals from/to the host computer. The extension connector 42 is provided for connecting between the image control unit 34 and the users printed-circuit board mounted at the extension slot. The extension slot 38 is connected to the host computer through the user printed-circuit board.

As explained above, in the Figure 2 image scanner the extension connector 42 is provided for connecting to the user printed-circuit board mounted at the extension slot 38 within the image scanner.

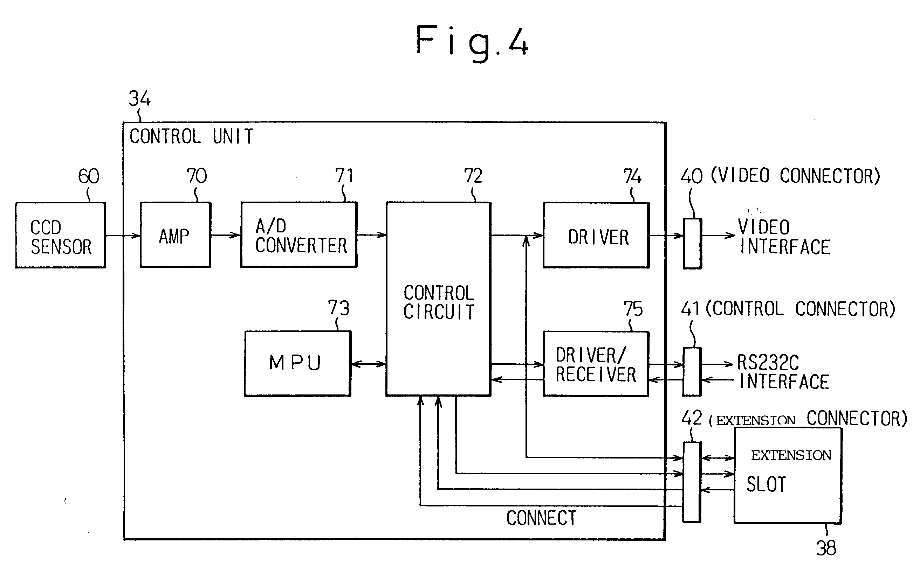

Figure 4 is a detailed block diagram of the image control unit shown in Fig. 2. As shown in the drawing, the image control unit 34 includes: an amplifier (AMP) 70 for amplifing the output of a CCD image sensor 60; an A/D converter 71 for converting analog signals to digital signals; a control circuit 72 for processing output signals from the A/D converter 71 and the carrier unit 31; a micro processor (MPU) 73 for supporting the control circuit 72; a driver 74 for outputting the image signal to the host computer, and a driver/receiver 75 for inputting/outputting control signals from/to the host computer.

The control circuit 72 is directly connected to the extension slot 38 through the extension connector 42 without passing through the driver 74 to send the image signal, and directly connected to the extended slot 38 through the extended connector 42 without passing through the driver/receiver 75 to send the control signal. That is, the control signal from the control circuit 72 can take two routes; one is connected to the control connector 41 through the driver/receiver 75 and the other is directly connected to the extension connector 42.

A video interface includes various image signals which are output from the driver 74 to the host computer through the video connector 40. A control interface (in general, RS-232-C is used) includes various control signals which are output from the driver/receiver 75 to the host computer through the control connector 41.

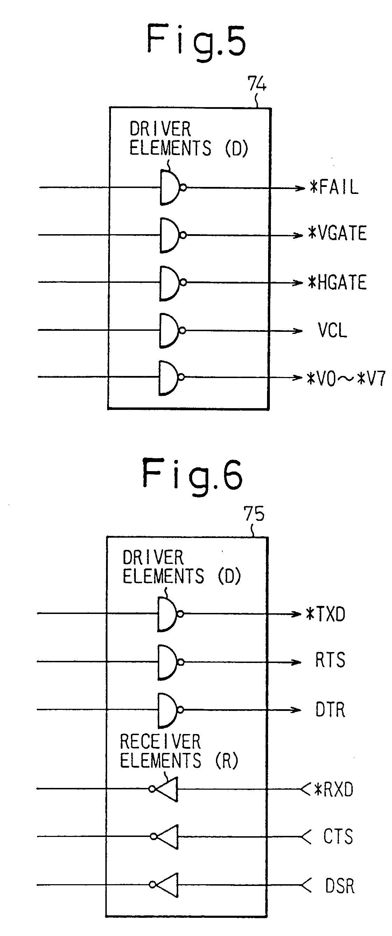

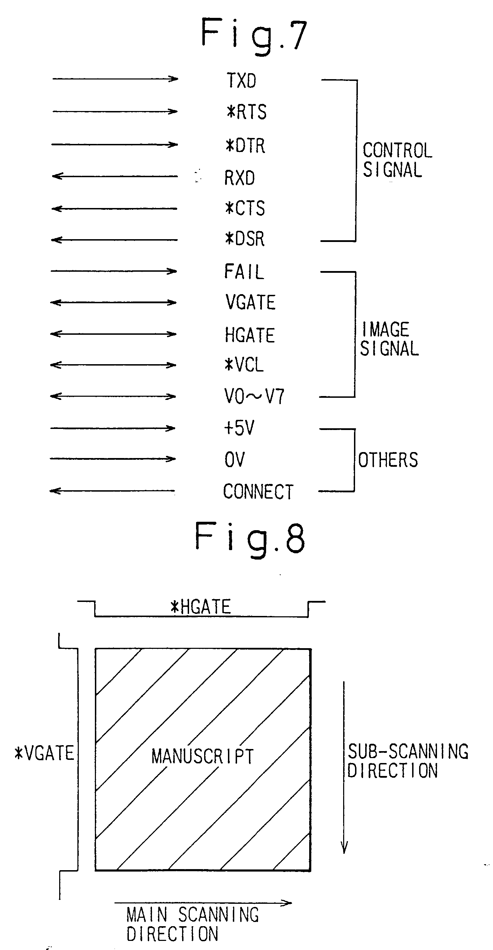

Figure 5 shows some examples of the video interface for image signals, Figure 6 shows some examples of the control interface for control signals, and Figure 7 shows the interface between the control circuit 72 and the extension slot 38.

In Fig. 5, the signals "FAIL", "VGATE", "HGATE", "VCL" and "V0" to "V7" represent the video interface between the host computer and the image control unit, and the symbol "*" indicates negative logic. The signal FAIL represents an abnormal state of the image scanner, the signal VGATE represents the validity of video data in the sub-scanning direction (i.e., the direction which is perpendicular to a main scanning direction of the CCD image sensor 60), the signal HGATE represents the validity of the video data in the main scanning direction, the signals VO to V7 represent the eight bits of video data, and the signal VCL represents the sampling clock of the video data VO to V7. Further, in the driver 74, the symbol "D" represents a driver element.

In Fig. 6, the signal "TXD" represents control data to be sent to the host computer, the signal "RTS" represents a sending request signal which requests the control data from the host computer, the signal "DTR" represents a ready state of its own image scanner. These signals are sent to the host computer through the driver element. The symbol "R" represents a receiver element.

The signal "RXD" represents the control data from the host computer, the signal "CTS" represents an acknowledge signal for the sending request signal RTS from the host computer, the signal "DSR" represents a ready state of the host computer. These signals are sent from the host computer to the image scanner through the receiver elements.

In Fig. 7, the interface between the control circuit 72 and the extension slot 38 includes the control signals (TXD, *RTS, *DTR, RXD, *CTS, and *DSR), the image signals (FAIL, VGATE, HGATE, *VCL, and V0-V7), and others (+5, 0(V), and CONNECT).

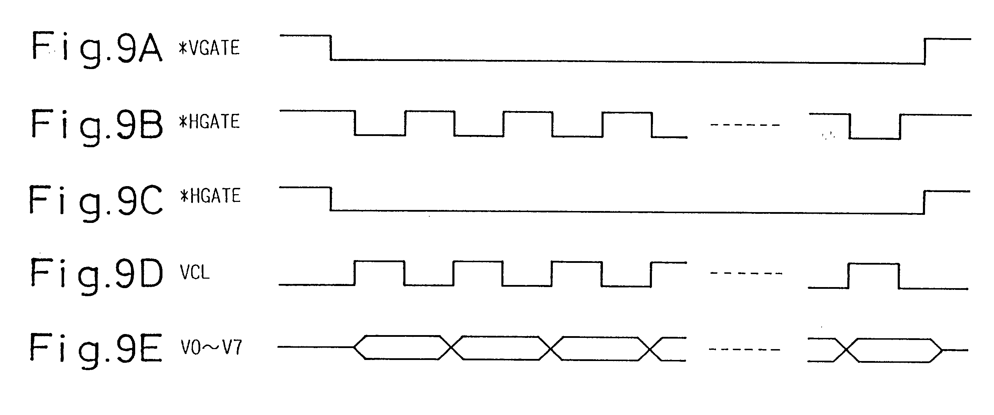

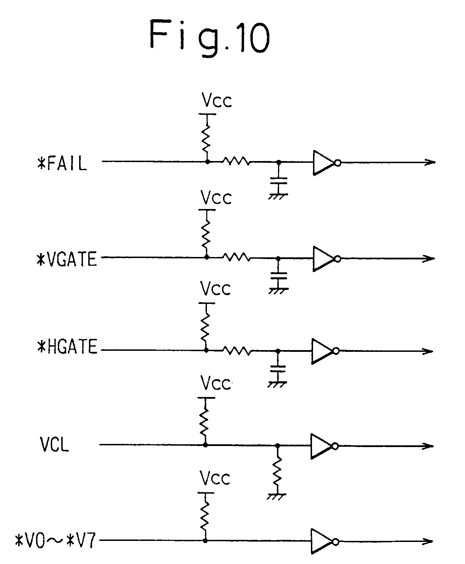

Figure 8 is an explanatory view for explaining the main scanning direction and the sub-scanning direction, Figures 9A to 9E are timing charts of the video interface, and Figure 10 is a detailed circuit of the receiver of Fig. 5. As explained above, the signal VGATE represents the validity of video data in the sub-scanning direction, and the signal HGATE represents validity of the video data in the main-scanning direction. In the drawing, the symbol "*" indicates negative logic.

In Figs. 9A to 9E, the eight bits of video data V0 to V7 are output from the driver 74 in response to the clock VCL. The video data V0 to V7 can represent eight pixels of image data when they are binarized, or one pixel of image data when they are not binarized.

Through the control interface, the host computer applies various control signals including initialization of the mechanism, read size and density of the manuscript, situation of mechanism, FB or ADF type, etc., to the image control unit 34.

The control circuit 72 sends the image signal to the extension slot 38 through the extension connector 42 without passing through the driver 74, and sends or receives control signals to/frcm the extension slot 38 through the extension connector 42 without passing through the driver/receiver 75. As shown by arrows in Fig. 7, the signals TXD, RTS and DTR are sent from the control unit to the host computer, and the signals RXD, CTS and DSR are sent from the host computer to the control unit. Further, the signal FAIL is sent from the control unit to the host computer. Still further, signals VGATE, HGATE, ∗VCL and VO to V7 are sent or received between the control unit and the host computer.

When the control circuit 72 detects a connection of the extension slot 38 to the connector 42 in accordance with the connection signal (CONNECT) from the extension slot, the control circuit 72 sets the control signal, which is not passed through the driver/receiver, to the valid state through the connector 22. Alternatively, both connectors 21 and 22 become valid and the control circuit 72 sets the control signal to the valid state using a predetermined program.

When the image signal passes through the driver 74, a transfer time per one byte is limited to be no less than, for example, 0.8 µs, in a conventional art. Further, when a control signal passes through the driver/receiver 75, a transfer time per one byte is limited to be no less than, for example, 100 µs in the conventional art. However, according to the present embodiment, since the extension slot 38 is directly connected to the control unit 34 without passing through the driver 74 and driver/receiver 75, it is possible to use the control signal without any limitation.

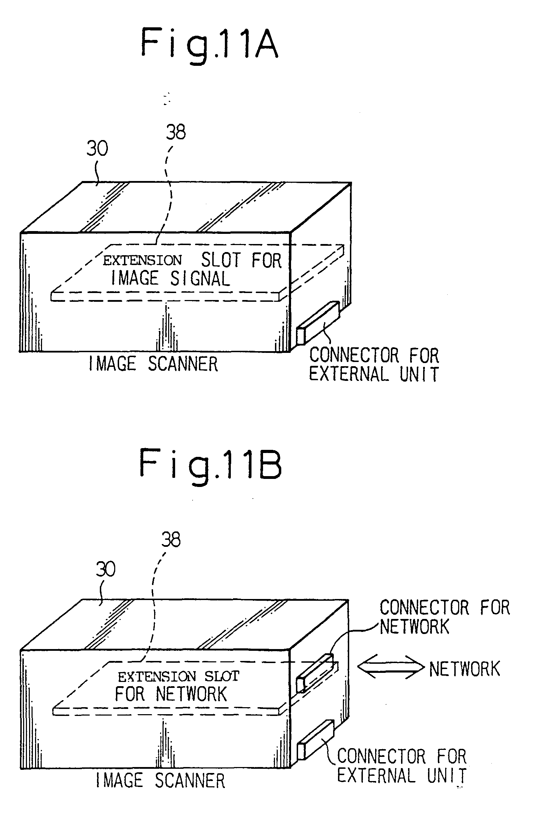

Figures 11A and 11B are explanatory views for explaining the connection to the external stage. In Fig. 11A, a connector for an external unit includes the connectors 40, 41 and 42 of Fig. 2. That is, when the user wishes to obtain an image signal processed by a new signal process which is not included in the image scanner, the extension slot 38 is connected to the extension connector 42 (see Fig. 2). Further, the image signal of the extension slot 38 is returned to the control circuit 72 and output to the video connector 40 and the control connector 41 through the driver 74 and the driver/receiver 75.

In Fig. 11B, the connector for the external unit includes the video connector 40 and the control connector 41, and a connector for an external network includes the extension connector 42. That is, when the user wishes to connect an external network which cannot be connected to the video/control interface of the image scanner 30, the extension slot 38 is connected to the extension connector 42 (see Fig. 2).

As explained in Fig. 4, as the image signal from the extension connector 42 to the extension slot 38 is not passed through the driver 74, it is possible to easily perform the image processing which is required by the user without any limitation imposed by the driver 74. In this case, when a high speed processing is required by the user, the video interface is used. On the contrary, when the high speed processing is not required by the user, the control interface is used.

Further, as the control signal from the extension connector 42 to the extension slot 38 is not passed through the driver/receiver 75, it is possible to easily perform the connection to a network which is required by the user without any limitation imposed by the driver/receiver 75.

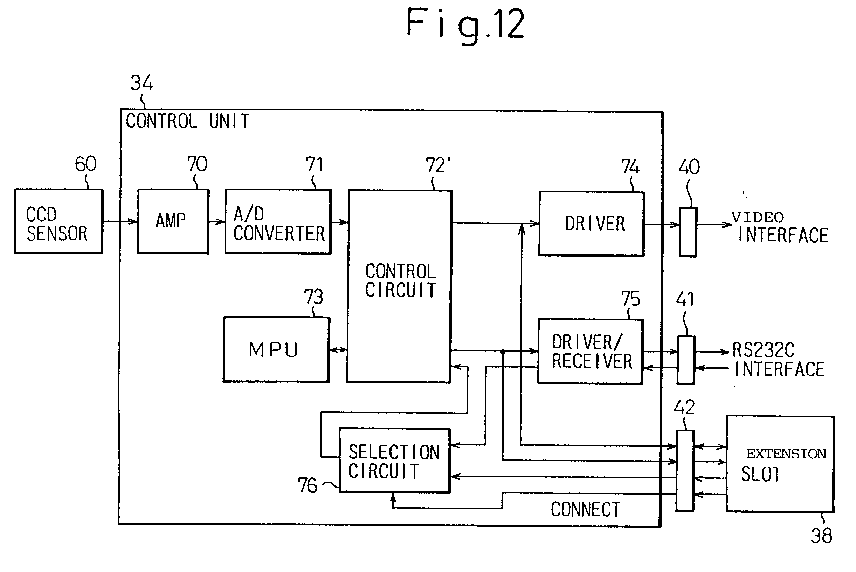

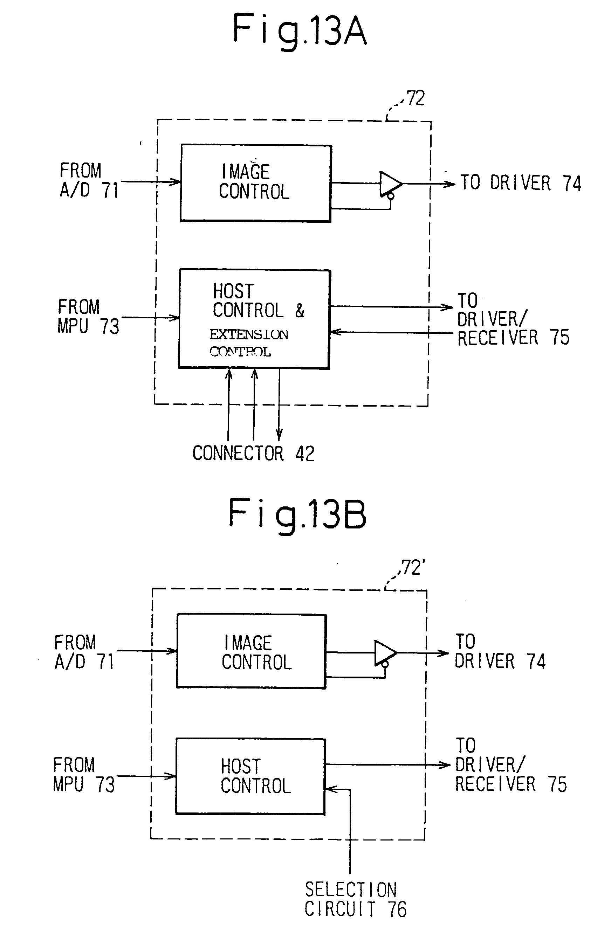

Figure 12 is a detailed block diagram of the image control unit 34 as another example, and Figure 13B is a detailed block diagram of the control circuit 72' shown in Fig. 12. As shown in the drawing, a selection circuit 76 is provided for preventing a collision of the control signals. The control circuit 72' includes an image control portion and a host control portion. The image control portion receives the output of the A/D converter 71 and outputs the image signal to the driver 74 through a tri-state element. The host control portion receives the output of the microprocessor 73 and outputs the control signal to the driver/receiver 75 as explained below.

The control signals have a direct path from the control circuit 72' to the driver/receiver 75, and also have a first return path from the driver/receiver 75 through the selection circuit 76. The control signals also have a second return path from the extension connector 42 through the selection circuit 76. That is, the control circuit 72' receives control signals either via the driver/receiver 75 or via the extension connector 42. In this case,when the extension slot 38 is not connected to the extension connector 42, the first path is selected. On the other hand, when the extension slot 38 is connected to the extension connector 42, the second path is selected. Accordingly, it is possible to prevent collision of the control signals since the control signals can select one of two paths in accordance with connection of the extension slot 38.

Figure 13A is a detailed block diagram of the control circuit 72 shown in Fig. 4. The control circuit 72 includes an image control portion and a host control/extended control portion. The image control portion receives the output of the A/D converter 71 and outputs the image signal to the driver 74 through the tri-state element. The host control/extended control portion receives the output of the micro processor 73 and receives/outputs the control signal from/to the driver/receiver 75.

As shown in the drawing, the control signal is directly sent/received to/from the driver/receiver 75. The connect signal CONNECT is provided from the extension connector 42 to the host control/extended control portion. That is, there are two paths for the control signal, i.e., one (first path) is provided throuqh the driver/receiver 75, and the other (second path) is provided through the extension connector 42 without passing through the driver/receiver 75. When the extension slot 38 is connected to the extended connector 42, the second path is selected by the predetermined program.

## Claims

1. Image scanning apparatus comprising image reading means (1; 31), including a light source and sensor means (60), for reading an image recorded on a document, and also comprising image control means (2) including:
main circuitry (34, 35), provided on a main printed-circuit board (20) of the image control means, for carrying out predetermined functions of the apparatus, the main circuitry including a control portion (72; 72') connected operatively to the said image reading means and operable to receive one or more input control signals and to output one or more output control signals and one or more image signals representing the image read by the image reading means;
main connector means (21,40,41) for connection when the apparatus is in use to an external device to receive the said input control signal(s) therefrom and to output the said output control signal(s) and the said image signal(s) thereto;
an extension slot (38) at which a user-provided printed-circuit board (23), carrying further circuitry for carrying out further functions different from the said predetermined functions, can be mounted within the image control means (2) when the apparatus is in use; and
extension connector means (22), connected to the said main printed-circuit board and also arranged to connect to such a user-provided printed-circuit board (23) when mounted at the said extension slot (38), for connecting the said further circuitry to the said control portion of the said main circuitry;
characterised in that the said main circuitry (34) includes signal driver/receiver means (74, 75), connected between the said control portion (72, 72') and the said main connector means (20, 40, 41), for receiving the said input control signal(s) from the said external device and supplying that/those signal(s) to the said control portion, and for receiving the said output control signal(s) and the said image signal(s) from the said control portion and supplying those signals to the said external device; and
further characterised in that, when such a user-provided printed-circuit board is mounted at the said extension slot (38), the said extension connector means (42) serve to receive the said input control signal(s) from the said further circuitry and to supply that/those signal(s) to the said control portion (72; 72') and also serve to receive the said output control signal(s) and the said image signal(s) from the control portion and to supply those signals to the said further circuitry, without the said input and output control signals and the said image signal(s) passing through the said signal driver/receiver means (74, 75).

2. Apparatus as claimed in claim 1, wherein the said external device is a host computer.

3. Apparatus as claimed in claim 1 or 2, wherein:
the said main circuitry (34) further comprises a microprocessor (73) connected to the said control portion (72; 72');
the said signal driver/receiver means (74, 75) comprise a driver (74) and a driver/receiver (75), each connected to the said control portion (72; 72'); and
the said main connector means (21) comprise a video connector (40) connected to the said driver (74) for supplying the said image signal(s) to the said external device, and also comprise a control connector (41) connected to the said driver/receiver (75) for supplying the said output control signal(s) to, and receiving the said input control signal(s) from, the said external device.

4. Apparatus as claimed in any preceding claim further comprising connect signal generation means for generating a connect signal (CONNECT) indicating that such a user-provided printed-circuit board (23) is mounted at the said extension slot (38).

5. Apparatus as claimed in claim 4, wherein the said connect signal (CONNECT) is supplied to the said control portion (72) and the control portion is switchable, under the control of a predetermined program, into an extended mode of operation in which any said input control signal received from the said external device via the said signal driver/receiver means (74,75) is treated as an invalid signal by the control circuit (72).

6. Apparatus as claimed in claim 4, wherein the said main circuitry (34) further comprises selector means (76) having a first input connected to the said signal driver/receiver means (75) for receiving the said input control signal(s) therefrom and a second input connected to the said extension connector means (42) for receiving the said input control signal(s) therefrom and also having an output connected to the said control portion (72'), the selector means being operable to select one of its said first and second inputs in dependence upon the said connect signal and to supply the input control signal(s) received at the selected input to its said output.

7. Apparatus as claimed in any preceding claim, wherein the said extension connector means (42) are set to a valid state when such a user-provided printed-circuit board (23) is mounted at the said extension slot.

8. Apparatus as claimed in any preceding claim, including a flat-bed type scanning unit (33) and an automatic-document-feeder type scanning unit (32), wherein the said extension connector means (22) are used for testing the difference between the said image signal(s) output by the said control portion when the same original document is scanned by the said flat-bed scanning unit (33) and by the said automatic-document-feeder scanning unit (32).

9. Apparatus as claimed in any preceding claim, wherein the image reading means also include a mirror and the sensor means include CCD sensors.

## Patentansprüche

1. Bildabtastvorrichtung, umfassend Bildlesemittel (1; 31), die eine Lichtquelle und ein Sensormittel (60) enthalten, zum Lesen eines Bildes, das auf einem Dokument aufgezeichnet ist, und auch umfassend Bildsteuermittel (2), enthaltend:
eine Hauptschaltungsanordnung (34, 35), die auf einer gedruckten Hauptleiterplatte (20) des Bildsteuermittels zur Durchführung vorbestimmter Funktionen der Vorrichtung vorgesehen ist, wobei die Hauptschaltungsanordnung einen Steuerabschnitt (72; 72') enthält, der betriebsbereit mit den Bildlesemitteln verbunden ist und für den Empfang eines oder mehrerer Eingangssteuersignale und für die Ausgabe eines oder mehrerer Ausgangssteuersignale und eines oder mehrerer Bildsignale, welche das von dem Bildlesemittel gelesene Bild darstellen, betriebsbereit ist;
Hauptanschlußmittel (21, 40, 41) zur Verbindung, wenn die Vorrichtung in Betrieb ist, mit einer externen Vorrichtung für den Empfang des Eingangssteuersignals (der Eingangssteuersignale) von dieser und für die Ausgabe des Ausgangssteuersignals (der Ausgangssteuersignale) und des Bildsignals (der Bildsignale) an diese;
einen Erweiterungssteckplatz (38), an dem eine vom Benutzer bereitgestellte gedruckte Leiterplatte (23), die eine weitere Schaltungsanordnung zur Ausführung weiterer Funktionen aufweist, die sich von den vorbestimmten Funktionen unterscheiden, in dem Bildsteuermittel (2) befestigt werden kann, wenn die Vorrichtung in Gebrauch ist; und
Erweiterungsanschlußmittel (22), die an die gedruckte Hauptleiterplatte angeschlossen sind und auch zur Verbindung mit einer solchen vom Benutzer bereitgestellten gedruckten Leiterplatte (23) angeordnet sind, wenn sie an dem Erweiterungssteckplatz (38) befestigt sind, für den Anschluß der weiteren Schaltungsanordnung an den Steuerabschnitt der Hauptschaltungsanordnung;
dadurch gekennzeichnet, daß die Hauptschaltungsanordnung (34) Signaltreiber/empfängermittel (74, 75) enthält, die zwischen dem Steuerabschnitt (72, 72') und dem Hauptanschlußmittel (20, 40, 41) angeschlossen sind, für den Empfang des Eingangssteuersignals (der Eingangssteuersignale) von der externen Vorrichtung und zum Zuleiten dieses Signals (dieser Signale) zu dem Steuerabschnitt, und zum Empfangen des Ausgangssteuersignals (der Ausgangssteuersignale) und des Bildsignals (der Bildsignale) von dem Steuerabschnitt und zum Zuleiten dieser Signale zu der externen Vorrichtung; und
des weiteren dadurch gekennzeichnet, daß, wenn eine vom Benutzer bereitgestellte gedruckte Leiterplatte an dem Erweiterungssteckplatz (38) befestigt ist, das Erweiterungsanschlußmittel (42) für den Empfang des Eingangssteuersignals (der Eingangssteuersignale) von der weiteren Schaltungsanordnung und zum Zuleiten dieses Signals (dieser Signale) zu dem Steuerabschnitt (72; 72') dient, sowie auch zum Empfangen des Ausgangssteuersignals (der Ausgangssteuersignale) und des Bildsignals (der Bildsignale) von dem Steuerabschnitt und zum Zuleiten dieser Signale zu der weiteren Schaltungsanordnung, ohne daß die Eingangs- und Ausgangssteuersignale und das Bildsignal (die Bildsignale) durch das Signaltreiber/empfängermittel (74, 75) gehen.

2. Vorrichtung nach Anspruch 1, wobei die externe Vorrichtung ein Hostrechner ist.

3. Vorrichtung nach Anspruch 1 oder 2, wobei:
die Hauptschaltungsanordnung (34) des weiteren einen Mikroprozessor (73) umfaßt, der an den Steuerabschnitt (72; 72') angeschlossen ist;
die Signaltreiber/empfängermittel (74, 75) einen Treiber (74) und einen Treiber/Empfänger (75) umfassen, die jeweils an den Steuerabschnitt (72; 72') angeschlossen sind; und
die Hauptanschlußmittel (21) ein Videoanschlußteil (40) umfassen, das an den Treiber (74) angeschlossen ist, um das Bildsignal (die Bildsignale) zu der externen Vorrichtung zu leiten, und auch ein Steueranschlußteil (40) umfassen, das an den Treiber/Empfänger (75) angeschlossen ist, um das Ausgangssteuersignal (die Ausgangssignale) zu der externen Vorrichtung zu leiten und das Eingangssteuersignal (die Eingangssteuersignale) von dieser zu empfangen.

4. Vorrichtung nach einem der vorangehenden Ansprüche, des weiteren umfassend
Anschlußsignalerzeugungsmittel zur Erzeugung eines Anschlußsignals (CONNECT), welches angibt, daß einer derartige, vom Benutzer bereitgestellte, gedruckte Leiterplatte (23) an dem Erweiterungssteckplatz (38) montiert ist.

5. Vorrichtung nach Anspruch 4, wobei das Anschlußsignal (CONNECT) zu dem Steuerabschnitt (72) geleitet wird und der Steuerabschnitt unter der Steuerung eines vorgegebenen Programms in einen erweiterten Betriebsmodus umschaltbar ist, in dem jedes Eingangssteuersignal, das über die Signaltreiber/empfängermittel (74, 75) von der externen Vorrichtung empfangen wird, von der Steuerschaltung (72) als ungültiges Signal behandelt wird.

6. Vorrichtung nach Anspruch 4, wobei die Hauptschaltungsanordnung (34) des weiteren Auswahlmittel (76) umfaßt, von welchen ein erster Eingang an das Signaltreiber/empfängermittel (75) für den Empfang des Eingangssteuersignal (der Eingangssteuersignale) von diesem angeschlossen ist, und ein zweiter Eingang an das Erweiterungsanschlußmittel (42) für den Empfang des Eingangssteuersignals (der Eingangssteuersignale) von diesem angeschlossen ist, und von welchem auch ein Ausgang an den Steuerabschnitt (72') angeschlossen ist, wobei das Auswahlmittel betätigbar ist, um einen seiner ersten und zweiten Eingänge abhängig von dem Anschlußsignal zu wählen, und das Eingangssteuersignal (die Eingangssteuersignale), das (die) bei dem gewählten Eingang empfangen wird (werden), zu seinem Ausgang zu leiten.

7. Vorrichtung nach einem der vorangehenden Ansprüche, wobei die Erweiterungsanschlußmittel (42) in einen gültigen Zustand gesetzt werden, wenn eine vom Benutzer bereitgestellte gedruckte Leiterplatte (23) an dem Erweiterungssteckplatz befestigt ist.

8. Vorrichtung nach einem der vorangehenden Ansprüche, enthaltend eine Abtasteinheit (33) vom Flachbett-Typ und eine Abtasteinheit (32) vom automatischen Dokumentzuführ-Typ, wobei die Erweiterungsanschlußmittel (42) zum Testen des Unterschiedes zwischen dem Bildsignal (den Bildsignalen), das (die) von dem Steuerabschnitt ausgegeben wird (werden), verwendet werden, wenn dasselbe Originaldokument von der Abtasteinheit (33) vom Flachbett-Typ und der Abtasteinheit (32) vom automatischen Dokumentzuführ-Typ abgetastet wird.

9. Vorrichtung nach einem der vorangehenden Ansprüche, wobei die Bildlesemittel auch einen Spiegel enthalten und die Sensormittel CCD-Sensoren enthalten.

## Revendications

1. Appareil d'analyse d'image comprenant un moyen de lecture d'image (1 ; 31), comportant une source de lumière et un moyen capteur (60), servant à lire une image enregistrée sur un document, et comprenant également un moyen de commande d'image (2), comportant :
un circuit principal (34, 35), disposé sur une carte à circuit imprimé principale (20) du moyen de commande d'image, et servant à effectuer des fonctions prédéterminées de l'appareil, le circuit principal comportant une partie de commande (72 ; 72') connectée fonctionnellement audit moyen de lecture d'image et ayant pour fonction de recevoir un ou plusieurs signaux de commande d'entrée et de délivrer un ou plusieurs signaux de commande de sortie et un ou plusieurs signaux d'image représentant l'image lue par le moyen de lecture d'image ;
un moyen connecteur principal (21, 40, 41) réalisant la connexion, lorsque l'appareil est en utilisation, avec un dispositif externe afin de recevoir ledit ou lesdits signaux de commande d'entrée de la part de celui-ci et de délivrer ledit ou lesdits signaux de commande de sortie et ledit ou lesdits signaux d'image à celui-ci ;
une fente d'extension (38) dans laquelle une carte à circuit imprimé (23) fournie par l'utilisateur, portant d'autres circuits qui permettent d'effectuer d'autres fonctions, différentes desdites fonctions prédéterminées, peut être montée à l'intérieur du moyen de commande d'image (2) lorsque l'appareil est en utilisation ; et
un moyen connecteur d'extension (22), connecté à ladite carte à circuit imprimé principale et conçu également pour être connecté à une semblable carte à circuit imprimé (23) fournie par l'utilisateur lorsque celle-ci est montée dans ladite fente d'extension (38), afin de connecter lesdits autres circuits à ladite partie de commande dudit circuit principal ;
caractérisé en ce que ledit circuit principal (34) comporte des moyens de commande/réception de signaux (74, 75), connectés entre ladite partie de commande (72, 72') et ledit moyen connecteur principal (20, 40, 41), afin de recevoir ledit ou lesdits signaux de commande d'entrée de la part dudit dispositif externe et de fournir ce ou ces signaux à ladite partie de commande, et afin de recevoir ledit ou lesdits signaux de commande de sortie et ledit ou lesdits signaux d'image de la part de ladite partie de commande et de fournir ces signaux audit dispositif externe ; et
caractérisé en outre en ce que, lorsqu'une semblable carte à circuit imprimé fournie par l'utilisateur est montée dans ladite fente d'extension (38), ledit moyen connecteur d'extension (42) sert à recevoir ledit ou lesdits signaux de commande d'entrée de la part desdits autres circuits et à fournir ce ou ces signaux à ladite partie de commande (72 ; 72') et sert aussi à recevoir ledit ou lesdits signaux de commande de sortie et ledit ou lesdits signaux d'image de la part de la partie de commande et à fournir ces signaux auxdits autres circuits, sans que lesdits signaux de commande d'entrée et de sortie et ledit ou lesdits signaux d'image ne passent par lesdits moyens de commande/réception de signaux (74, 75).

2. Appareil selon la revendication 1, où ledit dispositif externe est un ordinateur principal.

3. Appareil selon la revendication 1 ou 2, où :
ledit circuit principal (34) comprend en outre un microprocesseur (73) connecté à ladite partie de commande (72 ; 72') ;
lesdits moyens de commande/réception de signaux (74, 75) comprennent un moyen de commande (74) et un moyen de commande/réception (75), qui sont chacun connectés à ladite partie de commande (72 ; 72'); et
ledit moyen connecteur principal (21) comprend un connecteur vidéo (40) connecté audit moyen de commande (74) afin de fournir ledit ou lesdits signaux d'image audit dispositif externe, et comprend également un connecteur de commande (41) connecté audit moyen de commande/réception (75) afin de délivrer ledit ou lesdits signaux de commande de sortie audit dispositif externe et de recevoir, de celui-ci, ledit ou lesdits signaux de commande d'entrée.

4. Appareil selon l'une quelconque des revendications précédentes, comprenant en outre un moyen générateur de signal de connexion servant à produire un signal de connexion (CONNECT) indiquant qu'une semblable carte à circuit imprimé (23) fournie par l'utilisateur est montée dans ladite fente d'extension (38).

5. Appareil selon la revendication 4, où ledit signal de connexion (CONNECT) est fourni à ladite partie de commande (72), et la partie de commande peut commuter, sous commande d'un programme prédéterminé, en un mode d'extension de fonctionnement, dans lequel tout dit signal de commande d'entrée reçu de la part dudit dispositif externe via lesdits moyens de commande/réception de signaux (74, 75) est traité comme un signal non valable par le circuit de commande (72).

6. Appareil selon la revendication 4, où ledit circuit principal (34) comprend en outre un moyen sélecteur (76) ayant une première entrée connectée audit moyen de commande/réception de signaux (75) afin de recevoir ledit ou lesdits signaux de commande d'entrée de celui-ci et une deuxième entrée connectée audit moyen connecteur d'extension (42) afin de recevoir ledit ou lesdits signaux de commande d'entrée de la part de celui-ci, et ayant également une sortie connectée à ladite partie de commande (72'), le moyen sélecteur ayant pour fonction de sélectionner l'un de ses dits premier et deuxième signaux d'entrée en fonction dudit signal de connexion et de fournir le ou les signaux de commande d'entrée reçus sur l'entrée sélectionnée à sa dite sortie.

7. Appareil selon l'une quelconque des revendications précédentes, où ledit moyen connecteur d'extension (42) est positionné dans un état valable lorsqu'une semblable carte à circuit imprimé (23) fournie par l'utilisateur est montée dans ladite fente d'extension.

8. Appareil selon l'une quelconque des revendications précédentes, comportant une unité d'analyse du type à plat (33) et une unité d'analyse du type à alimentation automatique en documents, où ledit moyen connecteur d'extension (22) est utilisé pour contrôler la différence entre ledit ou lesdits signaux d'image délivrés par ladite partie de commande lorsque le même document original est analysé par ladite unité d'analyse à plat (33) et par ladite unité (32) d'analyse du type à alimentation automatique en documents.

9. Appareil selon l'une quelconque des revendications précédentes, où le moyen de lecture d'image comporte également un miroir et le moyen capteur comporte des capteurs du type dispositifs de couplage de charges, ou CCD.
